# EUROPEAN PATENT APPLICATION

(11) **EP 4 109 406 A1**
(43) Date of publication of application: **28.12.2022**
(21) Application number: 22168441.8
(22) Date of filing: 14.04.2022
(51) Int. Cl.: G06T 7/90, G06T 11/00

(54) **A METHOD FOR ADAPTING COLOR OF AN OVERLAY DISPLAYED IN A DISPLAY UNIT OF A VEHICLE AND A SYSTEM THEREOF**

(30) Priority: 24.06.2021 GB 202109046
(71) Applicant: Continental Autonomous Mobility Germany GmbH, 85057 Ingolstadt (DE)
(72) Inventor: Friebe, Markus, 339780 Singapore (SG); Gotur, Chetan, 339780 Singapore (SG); Misrilal, Lakshmankumar, 339780 Singapore (SG); Paul Raj, Rashmi, 339780 Singapore (SG)
(74) Representative: Continental Corporation

(57) **Abstract**

A method for adapting color of an overlay displayed in a display unit 203b of a vehicle is disclosed. The method includes aspects of determining a first color of images corresponding to surroundings of the vehicle to be displayed on the display by a control unit 202 of the vehicle. Further, one or more second colors contrasting to the first color is determined by the control unit 202. A comparison between the first color and a pre-determined threshold limit is determined. The one of the one or more second colors are adapted by the control unit 202 to the overlay superimposed on the images displayed in the display unit 203b based on the comparison between the first color and the pre-determined threshold limit. Consequently, the visibility of the overlays 1a is improved by configuring overlays 1a with colors contrasting the surrounding image 1.

## Description

### TECHNICAL FIELD

Present invention relates in general to a field of automobiles. Particularly, although not exclusively, the present invention relates to an imaging system which generates an overlay that is electronically superimposed on a displayed images to assist a driver for maneuvering the vehicle. Further, embodiments of the present disclosure disclose a method for adapting color for overlays imposed on images displayed in a display unit of the vehicle.

### BACKGROUND

Vehicles may include display units or head units that indicate multiple operational parameters of the vehicle. Display units may be one or more screens positioned on dashboards of the vehicle. The display unit may provide a user interface for the vehicle's information and other media components. Majority of the currently manufactured vehicles are provided with at least one camera positioned at pre-determined locations. These cameras may be positioned at locations such that the surroundings of the vehicle are clearly captured. For instance, the camera may be positioned at a rear end of the vehicle and the images from the camera at the rear end of the vehicle may be displayed on the display unit when the user switches to a reverse gear. The camera at the rear end of the vehicle may assist the driver maneuver the vehicle reverse in various conditions including reserve parking, by displaying images of the surroundings at the rear end of the vehicle on the display unit. Similarly, images from other cameras such as front camera, cameras on right and left side mirrors may be displayed on the display unit for assisting and guiding the user to take turns.

Images displayed on the display unit may be imposed with overlays or guidelines. The dimensions of the overlays imposed in the images may indicate the overall space occupied by the vehicle and the overlays may include multiple zones. Each of the zones in the overlays are indicative of the distance ranges from the rear end of the vehicle. These zones may provide precise indications on the dimension the vehicle occupies while moving backwards. Consequently, the user may conduct a precise backup maneuver. Images or inputs from cameras positioned at various other locations may also be displayed onto the display unit.

Further, the overlays imposed on the images displayed on the display unit may always be of a standard color irrespective of its surroundings. The manufacturer often defines the overlays with a certain color and overlays are always imposed on the images with the same color. These overlays lack clarity when the vehicle traverses over path with the same color as the overlays. For instance, when the color of overlays is black in color and when the vehicle traverses over tarmac, the overlays are not clearly visible as the tarmac is also black in color and there exists a lack of contrast between the color of the tarmac and the color of the overlays. Consequently, the overlays are not clearly visible to the user and maneuvering the vehicle under such conditions becomes difficult.

The present disclosure has been devised in the light of the above considerations.

### SUMMARY OF THE INVENTION

One or more shortcomings of the conventional system or method are overcome, and additional advantages are provided through the provision of the method as claimed in the present disclosure.

Additional features and advantages are realized through the techniques of the present disclosure. Other embodiments and aspects of the disclosure are described in detail herein and are considered as part of the claimed disclosure.

In one non-limiting embodiment of the disclosure, a method for adapting color of an overlay displayed in a display unit of a vehicle is disclosed. The method includes aspects of determining a first color of images corresponding to surroundings of the vehicle to be displayed on the display by the control unit. Further, one or more second colors contrasting the first color is determined by the control unit, and one of the one or more second colors are adapted by the control unit to the overlay superimposed on the images displayed in the display unit.

In an embodiment of the disclosure, the control unit receives the images corresponding to surroundings of the vehicle from an image capturing unit associated with the vehicle.

In an embodiment of the disclosure, the control unit determines the second color by at least one of, selecting a contrasting color from a group of colors stored in a memory unit and by dynamically generating the second color contrasting the first color.

In an embodiment of the disclosure, the control unit is configured to generate an alert indication corresponding to one or more second colors contrasting the first color through a communication unit associated with vehicle. Further, one of the one or more second colors are adapted to the overlay superimposed on the images displayed in the display unit based on an input signal received through the communication unit within a predefined time window.

In an embodiment of the disclosure, the control unit is further configured to dynamically adapt, one of the one or more second colors to the overlay superimposed on the images displayed in the display unit when the input signal is not received within the predefined time window.

In an embodiment of the disclosure, a contrast between the standard color of the overlay and the first color is determined by the control unit.

In an embodiment of the disclosure, the control unit compares the contrast between the standard color of the overlay and the first color with a predetermined threshold limit. The control unit is further configured to determine one or more second colors, contrasting to the first color based on the comparison.

In an embodiment of the disclosure, the predetermined threshold limit ranges from 65% to 75%.

In another non-limiting embodiment of the disclosure, a system for adapting color of an overlay displayed in a display unit of a vehicle is disclosed. The system includes a control unit configured to determine a first color of images corresponding to surroundings of the vehicle to be displayed on the display. Further, one or more second colors contrasting the first color is determined by the control unit. The one or more second colors are adapted to the overlay superimposed on the images displayed in the display unit.

### BRIEF DESCRIPTION OF THE ACCOMPANYING FIGURES

The novel features and characteristic of the disclosure are set forth in the appended claims. The disclosure itself, however, as well as a preferred mode of use, further objectives, and advantages thereof, will best be understood by reference to the following detailed description of an illustrative embodiment when read in conjunction with the accompanying figures. One or more embodiments are now described, by way of example only, with reference to the accompanying figures wherein like reference numerals represent like elements and in which:
Fig. 1 illustrates a block diagram of a system for adapting colors of overlays displayed in a display unit of a vehicle, in accordance with an embodiment of the present disclosure.
Fig. 2 shows a detailed block diagram of components of the system for adapting colors of overlays 1a displayed in the display unit of the vehicle.
Fig. 3 is a flowchart for illustrating method steps of adapting color of overlays displayed in the display unit of the vehicle, in accordance with an embodiment of the present disclosure.
Fig.4 is a schematic view of an image with super imposed overlays displayed on a display unit of a vehicle, in accordance with an embodiment of the present disclosure.

The figures depict embodiments of the disclosure for purposes of illustration only. One skilled in the art will readily recognize from the following description that alternative embodiments of the method of adapting colour of overlays displayed in the display unit of the vehicle without departing from the principles of the disclosure described herein.

### DETAILED DESCRIPTION

In the summary above, in this description, in the claims below, and in the accompanying drawings,
reference is made to particular features including method steps of the invention. It is to be understood that the disclosure of the invention in this specification includes all possible combinations of such particular features. For example, where a particular feature is disclosed in the context of a particular aspect or embodiment of the invention, or a particular claim, that feature may also be used, to the extent possible, in combination with and/or in the context of other particular aspects and embodiments of the invention, and in the inventions generally.

It is to be noted that a person skilled in the art would be motivated from the present disclosure and modify various features of system or method, without departing from the scope of the disclosure. Therefore, such modifications are considered to be part of the disclosure. Accordingly, the drawings show only those specific details that are pertinent to understand the embodiments of the present disclosure, so as not to obscure the disclosure with details that will be readily apparent to those of ordinary skilled in the art having benefit of the description herein. Also, the method of the present disclosure may be employed in any kind of vehicles including commercial vehicles, passenger vehicles, and the like. However, complete vehicle which is not illustrated in the drawings of the disclosure is for the purpose of simplicity.

As used in the description below the term "Indication unit" refers to a hardware component which may provide visual indication. As an example, the indication unit may be a computer, a laptop, a tablet, a desktop, a device arranged with Light Emitting Diodes (LED) and the like. In another embodiment, the indication unit may provide a sound indication. As an example, the indication unit for the sound indication may be an alarm, a bell, and the like.

As used in the description below the term "control unit" refers to a hardware component such as at least one processor, volatile memory or nonvolatile memory, software comprising instructions executable by a processor, or a combination of software and hardware. The control unit may be adaptive to the vehicle audible device control unit or may be a centralized control unit of the vehicle or may be a dedicated control unit to the system associated with the centralized control unit of the vehicle. Further, the memory unit may be integral part of the control unit or may be communicatively coupled to control unit. The control unit may include specialized processing units such as integrated system (bus) controllers, memory management control units, floating point units, graphics processing units, digital signal processing units, etc. The processing unit may include a microprocessor, such as AMD Athlon, Duron or Opteron, ARM's application, embedded or secure processors, other line of processors, and the like.

As used in the description below the term "image capturing unit" refers to a camera that is suitable to be used with a vehicle, such as a motor vehicle, a trailer, or a sidecar. A vehicular camera may be installed in the interior of the vehicle, such as being attached to a rear-view mirror, or be mounted on an exterior portion of the vehicle, such as being affixed to a wing mirror. The image capturing unit captures and transmit an image of the vehicle's surroundings to the control unit.

As used in the description below the term "memory unit" refers to a hardware component that may be an integral component of the control unit or a separate component operatively coupled with the control unit. The memory unit may store instructions corresponding to a one or more colors which may be procured by the control unit for superimposing on overlays displayed on a display unit of the vehicle. As an example, the data is stored in the memory associated with the control unit. In some embodiments, the data may include input data, data received from the image capturing unit, data regarding the parameters determined from the control unit and other data.

As used in the description below the term "overlay" is a graphic projection inserted or imposed over an image captured from the image capturing unit. The graphic projection may be imposed on the image that may be displayed on a display unit of a vehicle. Further, graphic projections may serve as indications or markers to the user and may be used as reference to understand the surroundings of the vehicle.

As used in the description below the term "adapting color of overlay" refers to the process of changing the color of overlays displayed on a display unit in the vehicle. The color of the overlay may be changed by the control unit and the same changes may be reflected on the display unit of the vehicle.

As used in the description below the term "surroundings", "vehicles surroundings" refers to the area proximal to the vehicle for a certain pre-determined distance.

As used in the description below the term "first color" refers to the color of the surroundings of the vehicle.

As used in the description below the term "second color" refers to the color generated or selected by the control unit for adapting to the overlays that are imposed on the display unit of the vehicle.

As used in the description below the term "captured image" refers to the image received and transmitted from the image capturing unit and the camera mounted in the vehicle.

As used in the description below the term "input signal" refers to an option selected by the user through at least one of a display unit or a voice command. The user is provided with a plurality of color options and the user may select one of the colors from the plurality of color options for the overlay superimposed on the images displayed in the display unit. The user selecting one of the colors from the provided options acts as the input signal for the control unit.

As used in the description below the term "dynamically" refers to the aspect of generating a color contrasting the color of the surroundings from the captured image in real time. The term "dynamically" used in the description also refers to the aspect of automatically or in real time adapting the color to the overlays from the one or more-color options that are provided to the user.

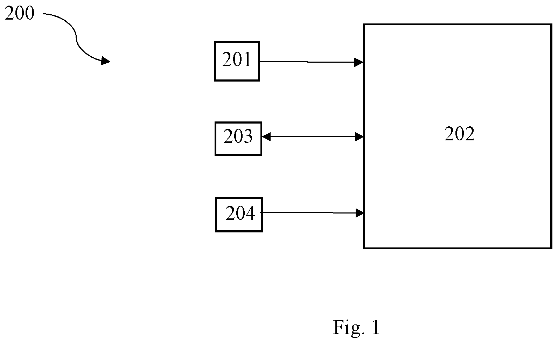

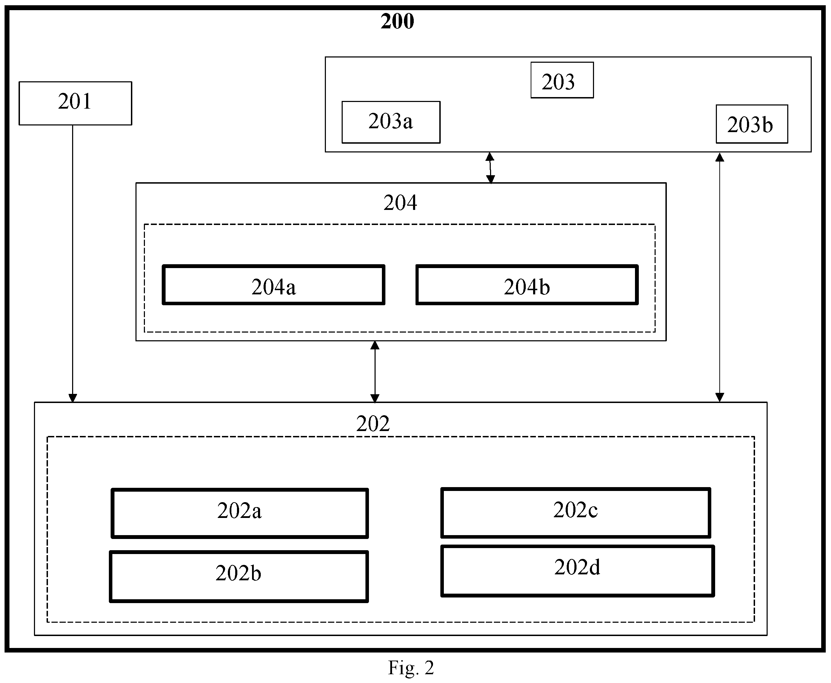

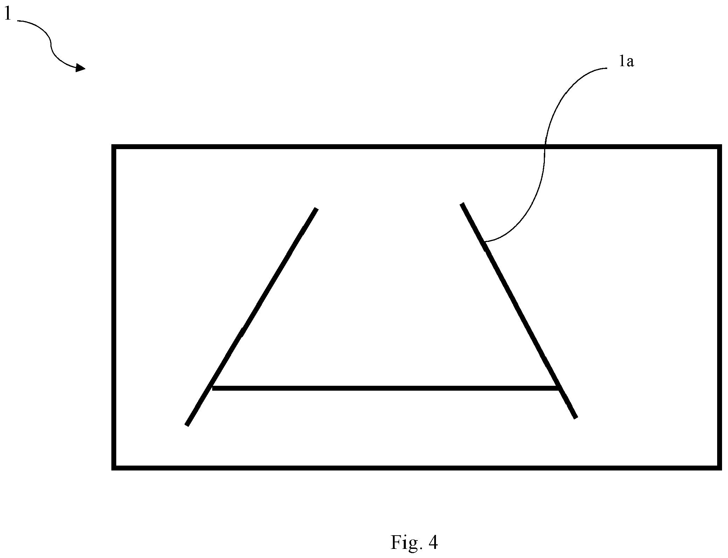

Fig.1 illustrates a block diagram of a system 200 for adapting colors of overlays 1a [seen from Fig. 4] displayed in a communication unit 203 of a vehicle. Fig. 2 shows a detailed block diagram of components of the system 200 for adapting colors of overlays 1a displayed in the display unit 203b of the vehicle. The vehicle may be mounted with one or more image capturing units or cameras 201 to assist the driver or user in various operations including maneuvering, parking, turning, and the like. The vehicle may include a front view image capturing unit 201a and a rear-view image capturing unit 201b mounted at a front and a rear end facia of the vehicle, respectively. In an embodiment, a left side mirror and a right-side mirror of the vehicle may also include image capturing units 201. The image capturing units 201 may be mounted in slots defined at multiple locations on the mirrors. The above-mentioned front view image capturing unit 201a and the rear-view image capturing unit 201b are only exemplary in nature and the same must not be construed as a limitation in aligning cameras 201 mounted at various other location in the vehicle. The image capturing unit 201 may be communicatively coupled to a control unit 202. The control unit 202 may display one or more images 1 from the image capturing unit 201 through the communication unit 203. The communication unit 203 may include an I/O interface 203a and a display unit 203b. The display unit 203b may be a screen that is mounted in a dashboard of a vehicle. The one or more images 1 received from the image capturing unit 201 may be displayed on the display unit 203b. In an embodiment a video of the surroundings from the image capturing unit 201 may be displayed on the display unit 203b. The images 1 may assist the driver in providing an improved view of the surroundings consequently, enabling the driver to recognize obstacles around the vehicle and accordingly maneuver the vehicle.

The images 1 displayed on the display unit 203b may be imposed with overlays 1a [seen from Fig. 4]. The dimensions of the overlays 1a imposed on the images 1 may indicate the overall space occupied by the vehicle and the overlays 1a may be include multiple zones. Each of the zones in the overlays 1a are indicative of the distance ranges from the rear end of the vehicle. These zones may provide precise indications on the space the vehicle occupies while moving backwards. Consequently, the user may conduct a precise backup maneuver. Further, the control unit 202 may be coupled to a memory unit 204. The memory unit 204 may include instructions corresponding to one or more colors for the overlays 1a. The control unit 202 may select a particular color for the overlays 1a imposed on the images 1 [seen from Fig. 4] displayed in the display unit 203b based on the inputs received from the image capturing unit 201.

In an embodiment, the control unit 202 may include a receiving module 202a, a processing module 202b and a color generation or selection module 202c and a display module 202d. The receiving module 202a, receives the images from the image capturing unit 201 and the processing module 202b may determine the color of the surroundings in the received image 1. The color generation module 202c may dynamically generate a color contrasting the color of the surroundings from the received image. The color selection module 202c may select instructions corresponding to colors that are in contrast with the color of the surroundings from the received image. Further, based on the output from the color generation or selection module 202c, the display module 202d of the control unit 202 may adapt the color to the overlays and the same may be displayed on the display unit 203b.

Further, the memory unit 204 may include an input data module 204a and other data module 204b. The input data module 204a may include instructions corresponding to one or more colors. The instructions may be fed into the memory unit 204 by the Input/Output (I/O) interface 203a of the communication unit 203. The control unit 202 may be associated with an Input/Output (I/O) interface 203a and the memory unit 204. In some embodiments, the I/O interface 203a and the memory unit 204 may be present within the control unit 202. The I/O interface 203a may receive input data for a selected time instance, from the manufacturer. In some embodiments, the input data may include, but not limited to, a plurality of instructions corresponding to a variety of colors. These colors may be selected by the control unit 202 and may be adapted to the overlays imposed on images displayed in the display unit 203b. The other data 204b may be stored data, including temporary data and temporary files, generated by the modules for performing the various functions of the control unit 202.

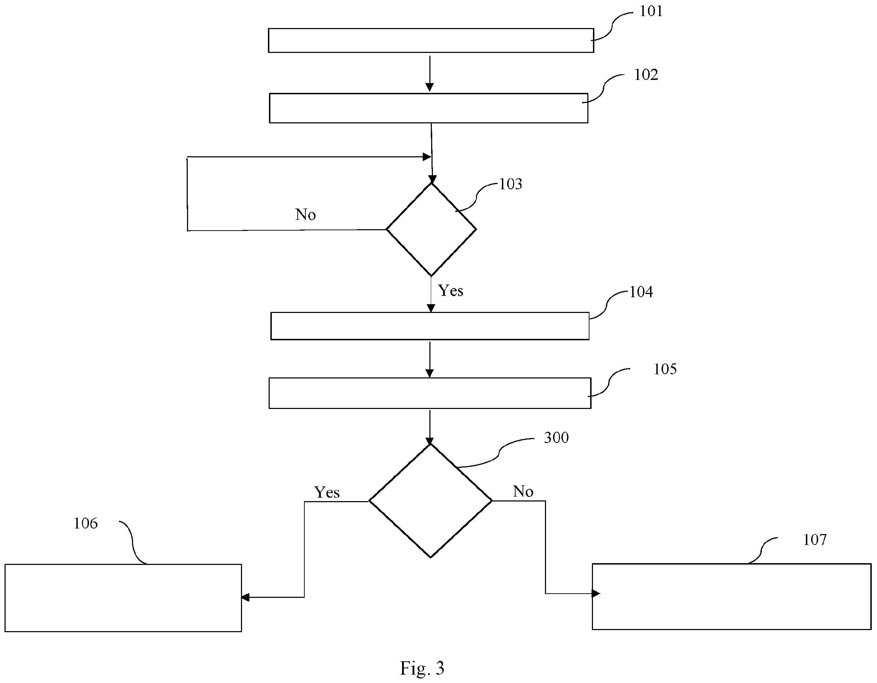

Fig. 3 is a flowchart for a method of adapting colors of overlays 1a displayed in the display unit 203b of the vehicle. Fig. 4 is a schematic view of the image 1 with the imposed overlays 1a displayed on the display unit 203b of the vehicle. The first step 101 involves, the control unit 202 receiving images 1 from the image capturing unit 201. The receiving module 202a may be configured to receive the images from the image capturing unit 201. The receiving module 202a of the control unit 202 may receive the images from the image capturing unit 201 under certain circumstances and based on a trigger signal. The control unit 202 is configured to activate the image capturing unit 201 upon receiving the trigger signal. For instance, the control unit 202 may receive images 1 from the image capturing unit 201 when the driver engages the reverse gear in the vehicle. In an embodiment, the reverse gear may act as a trigger signal. The control unit 202 may detect that the reverse gear has been engaged and the control unit 202 may activate the image capturing unit 201 positioned at the rear end of the vehicle. The images 1 from the image capturing unit 201 may be transmitted to the receiving module 202a of the control unit 202. The above exemplary embodiment describing the image capturing unit 201 at the rear end of the vehicle transmitting the images 1 to the control unit 202 must not be construed as a limitation. The control unit 202 may receive images 1 from the front camera, the camera mounted on the left mirror or right mirror etc. In an embodiment, operation of turn indicators, operation of park assist module etc., may also act as trigger signals for the activating the corresponding image capturing unit 201 by the control unit 202. In an embodiment, the control unit 202 may receive images without receiving any trigger signals. For instance, the control unit 202 may receive images continuously from cameras or image capturing unit 201 used for receiving and analyzing the pathway in self driving vehicles. The next step 102 of processing the received images 1 is performed when the control unit 202 receives images 1 from the image capturing 201.

Further, the processing module 202b of the control unit 202 may be configured to determine the color of the vehicle's surroundings in the second step 102. The color of the surroundings is further referred to as the first color. The received images 1 are indicative of a road or terrain condition. The images 1 may indicate if the road is a muddy road, a snow filled path, etc. The received images 1 may be initially processed by the processing module 202b of the control unit 202 to determine the color of the surroundings. The control unit 202 may determine the first color of the surroundings or road from the received images 1.

The control unit 202 may further compare the first color with a pre-determined threshold value at step 103. The threshold value is the value defined as per requirement which denotes when the overlay color switching should happen. Further, the overlay that is superimposed on the display may already be of a certain color. The control unit may compare the standard color of the overlay with the first color. If there exists a significant contrast between the standard color of the overlay and the first color, the same may be indicative that the change in color of the overlay may not be required. The contrast or deviation of the standard color of the overlay with respect to the first color may be quantified in percentage ranging from 0 to 100. A lower value of the same may be indicative of the deviation of the standard color of the overlay and the first color of the captured image 1. Further, a higher percentage estimated by the control unit may be indicate of an increasing similarity of color between the standard color of the overlay and the first color in the captured image 1. In an embodiment, the difference in contrast between the standard color of the overlay and the first color may be measured by any known methods or system in the art and the difference in contrast may be quantified in percentage. Once, the difference of contrast in terms of percentage is quantified by the control unit 202 after comparing the standard color of the overlay with the first color in the captured image 1, the same may be compared with a pre-determined threshold limit. In an embodiment, the threshold limit may range from 70% to 80% and is preferably herein considered as 75%. Further, if the difference in contrast of color estimated by the control unit 202 after comparing the standard color of the overlay with the first color in the captured image 1 is found to be lesser than 75%, the control unit may interpret the result as significant difference in contrast between the standard color of the overlay and the first color. Consequently, it is evident that the overlay that is superimposed on the display is clearly visible to the user.

The control unit 202 may perform the above-mentioned comparison between the estimated difference in the contrast between the standard color of the overlay and the first color and the pre-determined threshold value in pre-determined time intervals. The comparison may be estimated at time intervals of 15 minutes. The above-mentioned time intervals for estimating the comparison by the control unit 202 may not be limited to 15 minutes and may be suitably varied by the user through the I/O interface 203a. In an embodiment, the comparison by the control unit 202 may be performed continually. In another embodiment, the user may be provided with an option for initiating the comparison by the control unit 202.

Further, if the difference in contrast of the color estimated by the control unit 202 after comparing the standard color of the overlay with the first color in the captured image 1 is found to be greater than 75%, the control unit may interpret the result as lack of difference in contrast of color between the standard color of the overlay with the first color. The control unit 202 may further proceed to dynamically generate one or more colors contrasting the first color.

For instance, the control unit 202 may determine the first color of the surroundings or road from the received images 1 [the determined color may be a bright red color]. The control unit 202 may further compare the first color i.e., bright red color with a pre-determined threshold value at step 103. Further, the overlay, that is superimposed on the display may already of a preselected color [for example preselected color may be a yellow color]. The control unit may compare the yellow color of the overlay with the bright red color of the surroundings. If there exists a significant contrast between the yellow color of the overlay and the bright red color, the same may be indicative that the change in color of the overlay may not be required. The difference in contrast between the yellow color of the overlay and the bright red color may be measured and may be quantified in percentage. Once, the difference of contrast in terms of percentage is quantified by the control unit 202 after comparing the yellow color of the overlay with the bright red color in the captured image 1, the same may be compared with a pre-determined threshold limit. In an embodiment, the threshold limit may range from 70% to 80% and is preferably herein considered as 75%. Further, if the difference in contrast of color estimated by the control unit 202 after comparing the yellow color of the overlay with the bright red color in the captured image 1 is found to be lesser than 75%, the control unit may interpret the result as significant difference in contrast between the yellow color of the overlay and the bright red color. Consequently, it is evident that the overlay that is superimposed on the display is clearly visible to the user. Further, if the difference in contrast of the color estimated by the control unit 202 after comparing the yellow color of the overlay with the bright red color in the captured image 1 is found to be greater than 75%, the control unit may interpret the result as lack of difference in contrast of color between the yellow color of the overlay and the bright red color of the surroundings. Thus, the control unit 202 estimates the color contrast between the standard color of the overlay and the first color of the captured image.

The next step 104 involves determining a second color contrasting to the first color by the color generation or selection module 202c of the control unit 202. The control unit 202 may dynamically generate the second color from the color generation module 202c such that the second color is contrasting to the first color. The control unit 202 may generate the second color based on the detected first color. For instance, if the detected first color is white, the control unit 202 may generate a darker second color which is in complete contrast with the first color. In some embodiments, the control unit 202 and the color generation module 202c, may include pre-defined set of instructions to generate the second color contrasting to the first color dynamically. In an exemplary embodiment, the control unit 202 may generate up to five different colors, contrasting the first color determined from the surroundings of the captured images 1 as second colors. In some embodiments, the control unit may use RGB values for generating the one or more second colors. For example, if the determined first color is red, then the control unit determines the one or more second colors based on different combinations of green and blue such that they contrast the red color.

In an embodiment, the color selection module 202c of the control unit 202 may select a set of colors [second color] that are contrasting to the determined first color. The color selection module 202c of the control unit 202 may obtain the one or more second colors from memory unit 204. The control unit 202 may select the colors which are in complete contrast with the first color determined in above step 102. For instance, if the vehicle is travelling on tarmac and the color of the surroundings i.e., the first color is determined to be black, the control unit 202 may select colors in contrast with the color black such as white, light red, green etc. The second colors selected by the control unit 202 are always in contrast with the determined first color, such that the overlays 1a imposed on the images 1 displayed in the display unit 203b are always visible.

The control unit 202 may generate an alert indication regarding the second colors at step 105. The alert indication generated by the control unit 202 may correspond at least one of the above-mentioned selected set of second colors and the generated second colors. The control unit 202 may generate the indication regarding the one or more second colors that are suitable to be adapted to the overlays 1a based on the determined one or more second colors. In an embodiment, a set of five second colors contrasting the first color may be suitably indicated to the user. The control unit 202 may generate the indication through the communication unit 203. The communication unit 203 may herein be considered as the display unit 203b. The control unit 202 may display an indication/notification on the display unit 203b and the notification may convey the second colors that are suitable to be adapted to the overlays 1a imposed on the images 1 displayed on the display unit 203b. In an embodiment, at least one of the one or more second colors generated by control unit 202 may be provided as options for changing the color of the overlay. The control unit 202 may be configured to display the alert indication on the display unit 203b for a predefined time. In some embodiment, the alert indication may be provided through audio means, visual means, and audio-visual means.

The step 300 involves adapting the second color to the overlay 1a based on the user's response to the alert indication generated by the control unit 202 at step the 105. The step 106 involves adapting the second color to the overlay 1a when the user selects the second color. The user may select the second color of choice from the provided options on the display unit 203b of the communication unit 203. The display module 202d of the control unit 202 interprets the received inputs and accordingly adapts the color of the overlays 1a based on the inputs from the user. The control unit 202 adapts the color chosen by the user to the overlays 1a displayed on the display unit 203b. The step 106 involves adapting the second color to the overlays 1a if input is not received. If the user does not provide any inputs within the predefined time window, the control unit 202 may dynamically adapt the first option from the one or more-color options that are provided to the user at step 107. In an embodiment, the user may decline the alert notification from the control unit 202. This input from the user is interpreted by the display module 202d of the control unit 202 and the display module 202d may adapt the first color from the one or more second colors that are provided as options to the user to the overlays 1a. Thus, one of the one or more second colors may spontaneously be adapted to the to the overlays 1a superimposed on the images displayed in the display unit 203b.

In an embodiment, the control unit 202 may automatically determine the one or more second colors and adapt the one of the second color to the overlay 1a without any intervention from the user. The user may change settings if the user intends to change the color of the overlays 1a or if the user requires the alert indication to be displayed on the display unit 203b.

In an embodiment, the visibility of the overlays 1a is improved by configuring overlays 1a with colors contrasting the surrounding image 1.

All features disclosed in this specification (including the appended claims, abstract, and accompanying drawings) may be replaced by alternative features serving the same, equivalent, or similar purpose, unless expressly stated otherwise. Thus, unless expressly stated otherwise, each feature disclosed is one example only of a generic series of equivalent or similar features.

**Referral Numerals:**

| **Referral numeral** | **Description** |
|---|---|
| 200 | System for adapting colour of an overlay displayed in a display unit |
| 201 | Image capturing unit |
| 202 | Control unit |
| 202a | Receiving module |
| 202b | Processing module' |
| 202c | Colour generation or selection module |
| 202d | Display module |
| 203 | Communication unit |
| 203a | I/O interface |
| 203b | Display unit |
| 204 | Memory unit |
| 204a | Input data module |
| 204b | Other data module |
| 1 | Images from the image capturing unit |
| 1a | Overlays superimposed on the image |
| 101-106 | Method steps |

## Claims

1. A method for adapting color of an overlay displayed in a display unit (203b) in a vehicle, the method comprising:
determining, by a control unit (202) of the vehicle, a first color of images corresponding to surroundings of the vehicle to be displayed on the display unit (203b);
determining, by the control unit (202), one or more second colors, contrasting to the first color;
adapting, by the control unit (202), one of the one or more second colors to the overlay superimposed on the images displayed in the display unit (203b).

2. The method as claimed in claim 1, comprises, receiving by the control unit (202), the images corresponding to surroundings of the vehicle from an image capturing unit (201) associated with the vehicle.

3. The method as claimed in claim 1 comprises, determining by the control unit (202), the second color by at least one of, selecting a contrasting color from a group of colors stored in a memory unit (204) and by dynamically generating the second color contrasting the first color.

4. The method as claimed in claim 1, comprising:
generating by the control unit (202), an alert indication corresponding to one or more second colors contrasting the first color through a communication unit (203) associated with the vehicle; and
adapting by the control unit (202), one of the one or more second colors to the overlay superimposed on the images displayed in the display unit (203b) based on an input signal received through the communication unit (203) within a predefined time window.

5. The method as claimed in claim 1 comprises, dynamically adapting by the control unit (202), one of the one or more second colors to the overlay superimposed on the images displayed in the display unit (203b) when the input signal is not received within the predefined time window.

6. The method as claimed in claim 1 comprises, determining by the control unit (202), a contrast between the standard color of the overlay and the first color.

7. The method as claimed in claim 6, comprises:
comparing by the control unit (202), the contrast between the standard color of the overlay and the first color with a predetermined threshold limit; wherein, the control unit (202) is configured to determining, one or more second colors, contrasting to the first color based on the comparison.

8. The method as claimed in claim 7, wherein the predetermined threshold limit ranges from 65% to 75%.

9. A system for adapting color of an overlay displayed in a display unit (203b) of a vehicle, the system comprising:
a control unit (202) configured to:
determine a first color of images corresponding to surroundings of the vehicle wherein, the images corresponding to surroundings of the vehicle is displayed on a display unit (203b);
determine, one or more second colors contrasting the first color;
adapt, one of the one or more second colors to the overlay superimposed on the images displayed in the display unit (203b).

10. The system as claimed in claim 9, comprising an image capturing unit (201) communicatively coupled with the control unit (202) for receiving the images corresponding to surroundings of the vehicle.

11. The system as claimed in claim 9, wherein the control unit (202) is further configured to:
generate an alert indication corresponding to one or more second colors contrasting the first color through a communication unit (203) associated with the vehicle; and
adapt, one of the one or more second colors to the overlay superimposed on the images displayed in the display unit (203b) based on an input signal received through the communication unit (203) within a predefined time window.

12. The system as claimed in claim 9, wherein the control unit (202) is further configured to dynamically adapt, one of the one or more second colors to the overlay superimposed on the images displayed in the display unit (203b) when the input signal is not received within the predefined time window.

13. The system as claimed in claim 9 comprises, determining by the control unit (202), a contrast between the standard color of the overlay and the first color.

14. The system as claimed in claim 13, comprises:
comparing by the control unit (202) the contrast between the standard color of the overlay and the first color with a predetermined threshold limit; wherein, the control unit (202) is configured to determining, one or more second colors, contrasting to the first color based on the comparison.

15. The system as claimed in claim 14, wherein the predetermined threshold limit ranges from 65% to 75%.
